# EUROPEAN PATENT APPLICATION

(11) **EP 1 457 884 A1**
(43) Date of publication of application: **15.09.2004**
(21) Application number: 03005637.8
(22) Date of filing: 12.03.2003
(51) Int. Cl.: G06F 11/00

(54) **Method and device for reducing hierarchically structured data of a complex system**

(71) Applicant: Swiss Reinsurance Company, 8022 Zurich (CH)
(72) Inventor: Müller, Ralf H., 80637 München (DE); Buser, H. Dr., 85521 Ottobrunn (DE); Stengle, H. M., 81245 München (DE); Saganowska, Grazyna, 03-994 Warszawa (PL); Marek Czerski, Jozefoslaw, 05-500 Piaseczno (PL)
(74) Representative: Becker Kurig Straus

(57) **Abstract**

The present invention relates to a method for minimising hierarchical structured data of a complex system being constituted by a plurality of components. In particular, the present invention relates to a simplifying of the complex system by rating the hierarchical structured data associated with the components.

Individual components of a complex system are provided. The individual components represent the complex system at a certain grading scale, i.e. resolve the complex system at a certain component scale. The components are structured hierarchically representing the interdependencies of the components constituting the complex system. The hierarchical structure of the components is limited by at least one depth signal which is used to define a maximum hierarchical depth level or a maximum hierarchical depth levels within the hierarchical structure. In accordance with the hierarchical structure resulting from the defined components and constituted with respect to the interdependencies of the components and the defined depth signal a set of components is selected which results in a limited number of components which are associated to the hierarchical structure of limited maximum 'hierarchical depth. Individual value signals are defined. Each individual value signal is associated with one component. A set of rating signals is obtained by rating the individual signal values of the set of components considering the hierarchical structure. An overall replacement value basing on the rating signals, the individual value signals and in accordance with the hierarchical structure of the components an overall replacement value is determined. The overall replacement value id outputted by an output terminal, a data communication interface or is stored in a storage component.

## Description

The present invention relates to a method for minimising hierarchically structured data of a complex system being constituted by a plurality of components. In particular, the present invention relates to simplifying the complex system by rating the hierarchically structured data associated with the components. In particular the present invention relates to a technical process and device for semi-automatically determining replacement data of a complex system.

Complex systems comprise a plurality of components. The description and handling of data available in conjunction with such complex systems is a great challenge. Even the use of computers which may simplify the description and handling of data associated with complex systems leads often to an informational overload such that a reasonable description thereof is obsolete.

An object of the invention is to provide a method which allows to assign replacement data to a complex system, on the basis of which control purposes can be performed. The assigned replacement data provides an intellectual easily perceivable quantity which simultaneously is applicable to operate and control functions, respectively. In addition it is an object to reduce the amount of data necessary to map and control a complex system.

Another object of the invention is to provide a device which is adapted to operate the method according to an embodiment of the invention.

The object of the present invention is achieved with a method as defined in claim 1 and a processing device as defined in claim 8.

According to an aspect of the invention, a method for semi-automatically determining and outputting overall replacement data in representation of a complex system comprising a plurality of components is provided. In an operation the individual components are provided at an input terminal of a user interface. The individual components represent the complex system at a certain grading scale, i.e. resolve the complex system at a certain component scale. The components are structured hierarchically representing the interdependencies of the components constituting the complex system. The hierarchical structure may be a strict hierarchical structure with a plurality of hierarchical levels, which may form a hierarchical tree-like structure having branches. The hierarchical structure of the components is limited by a depth signal which is used to define a maximum hierarchical depth level or maximum hierarchical depth levels within the different branches of the hierarchical tree-like structure. The depth signal is defined at the input terminal of the user interface. In accordance with the hierarchical structure resulting from the defined components and constituted with respect to the interdependencies of the components and the defined depth signal a set of components is selected which results in a limited number of components which are associated to the hierarchical structure of limited maximum hierarchical depth.

Individual data signals are defined at the input terminal of the user interface, wherein each defined individual data signal is associated with one component and particularly, each defined individual data signal is associated with one component of the hierarchically lowest components of each branch. A set of rating signals is obtained by rating the individual signal data of the set of components considering the hierarchical structure. An overall replacement data which may be a value signal based upon the rating signals, the individual data signals and in accordance with the hierarchical structure of the components is determined. The overall replacement data is outputted by an output terminal, a data communication interface or is stored in a storage component.

According to an embodiment of the invention, the said deriving of said overall replacement data comprises determining a subset of components from said set of components on the basis of said rating signals which results in a simplified hierarchical structure.

According to an embodiment of the invention, the hierarchical structure of the components is obtained by analysing the components to identify interdependencies between the components which in turn allow to establish the hierarchical structure which is required.

According to an embodiment of the invention, at least one parameter signal is defined. The parameter signal allows to modify the individual signals by applying the parameter signal to an individual data signal. According to an embodiment of the invention, wherein each individual data signal represents an individual replacement data of a component. According to an embodiment of the invention, each parameter data signal reflects an environmental influence on said associated individual signal data which is described by a parametric relationship. According to an embodiment of the invention, the complex system comprises a number of collections of components. Each collection of components represents a single complex system. An overall replacement data is obtained for each signal complex. The total overall replacement data is determined from all overall replacement data of the single complex systems.

According to an aspect of the invention, a device for semi-automatically determining and outputting overall replacement data in representation of complex system comprising a plurality of components is provided. The device comprises an input terminal for providing said individual components, for providing at least one depth signal and for providing a plurality of individual data signals. Said input terminal may be an input terminal of a user interface, an input terminal receiving signal communicated via an interface component or an input terminal receiving signals from a storage component. The components are structured hierarchically in a plurality of hierarchical levels. The at least one depth signal represents one or more maximum hierarchical' depth levels. A component for selecting is adapted to select a set of components from said individual components in accordance with said at least one depth signal. Each individual signal is associated with one component of said set of components and particularly, each defined individual data signal is associated with one component of the hierarchically lowest components of each branch. A component for determining is adapted to obtain a set of rating signals by rating the components of said set of components in accordance with the individual signal data. A component for deriving the overall replacement data is adapted to determine the overall replacement data which may be a value signal from said individual data signals of said set of components in accordance with said rating signals. The overall replacement data is outputted, preferably to the output terminal of the user interface, to an output terminal via a communication interface or to an output terminal to a storage component.

According to an embodiment of the invention, the component for deriving further comprises a component for determining a subset of components from said set of components on the basis of said rating signals. The subset of components corresponds to a simplified hierarchical structure which is obtained from said hierarchical structure in accordance with said rating signals. The component for deriving the overall replacement data is further adapted to derive the overall replacement data from said individual data signals of components which are comprised in said subset of components.

According to an embodiment of the invention, The input terminal allows also to define at least one parameter data signal; Each of said at least one parameter data signal is associated with one individual data signal. A component for modifying serves to modify the at least one individual data signal in accordance with the at least one associated parameter data signal.

According to an embodiment of the invention, the device also comprises a component which allows to analyse said individual components in order to identify interdependencies and a component for constituting the hierarchical structure on the basis of the interdependencies resulted from the analysis.

According to an aspect of the invention, a software tool for determining the replacement data is provided. The software tool comprises program portions for carrying out the operations of the aforementioned methods when the software tool is implemented in a computer program and/or executed.

According to an aspect of the invention, there is provided a computer program product for operating an antenna coupling system. The computer program comprises program code portions directly loadable into a local memory of a microprocessor based component, a processing device, a terminal device, a serving device or a networked device for carrying out the operations of the aforementioned methods when the program is executed on thereon.

According to an aspect of the invention, a computer program product for determining the replacement data is provided which comprises program code portions stored on a computer readable medium for carrying out the aforementioned methods when the program product is executed on a microprocessor based component, a processing device, a terminal device, a serving device or a networked device.

According to an aspect of the invention a computer data signal is provided which is embodied in a carrier wave and represents instructions which when executed by a processor cause the operations of anyone of the aforementioned methods to be carried out. Thereby Internet applications of the invention are covered.

The determining of replacement data may comprise the determining of replacement values which constitute and represent approximate cost of replacing individual components or total components of a system after failure or destruction.

The accompanying drawings are included to provide a further understanding of the invention and are incorporated in and constitute a part of this specification. The drawings illustrate embodiments of the present invention and together with the description serve to explain the principles of the invention. In the drawings,
- Fig. 1a: shows a hierarchical structure of the components constituting the complex system according to an embodiment of the invention;
- Fig. 1b: shows a simplified hierarchical structure of the components constituting the complex system in accordance with a component rating according to an embodiment of the invention;
- Fig. 2: shows a flow chart illustrating an operational sequence of the method according to an embodiment of the invention; and
- Fig. 3: shows a block diagram illustrating a processing device for performing the method according to an embodiment of the invention.

Reference will be made in detail to the embodiments of the invention examples of which are illustrated in the accompanying drawings. Wherever possible the same reference numbers are used in the drawings and the description to refer to the same or like parts.

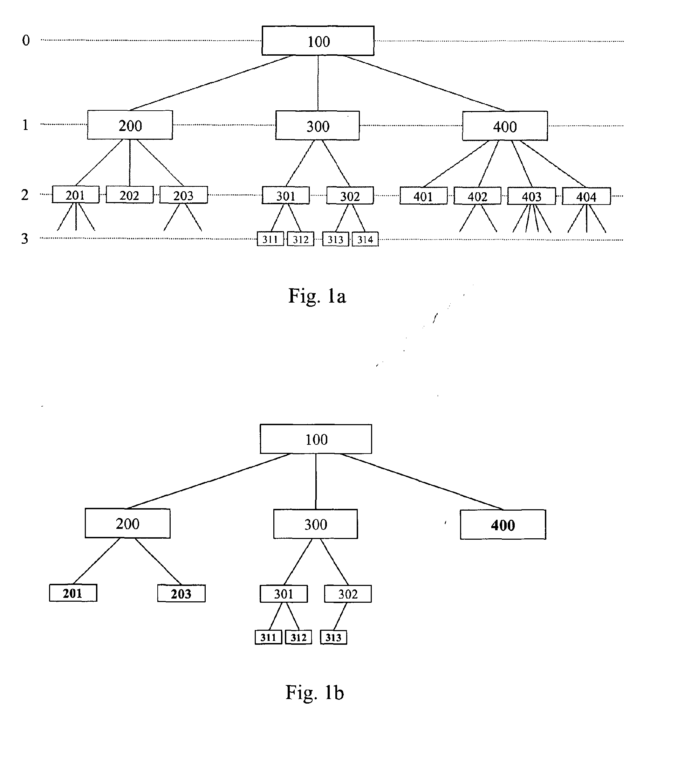

Fig 1a and Fig 1b will introduce to the hierarchical structure purposed by invention concept of the present invention for structuring complex systems to be simplified.

Fig. 1a shows a hierarchical structure of the components constituting the complex system according to an embodiment of the invention. The hierarchical structure is based on two principle types of structural elements representing the complex system and the plurality of component which are suitable to form the complex system. A root element 100 is defined to be the structural element with the high hierarchical level. The root element represents the complex system itself. Further structural elements 200 to 404, also denoted as child elements, are arranged subordinately to the root element. The total structure is strictly hierarchically structured, i.e. each of the child elements 200 to 404 has exactly one superordinately arranged element which is either one of the child elements 200 to 404 or the root element 100. Furthermore, each of the child elements 200 to 404 may have no, one or several subordinately arranged child elements.

To illustrate the strict hierarchical structure refer to the structural element 300. The structural element 300 has two subordinately arranged structural elements, the elements 301 and 302, and one exactly superordinately arranged element, the root element 100. Now refer to structural element 202. The structural element 300 has no subordinately arranged structural element and one exactly superordinately arranged element, the structural element 200.

To described the structural elements hierarchical levels shall be defined which allow to group systematically the structural elements of the hierarchical structure. The root element is defined to be associated with the hierarchical level 0. Structural elements which are directly subordinated to the root element 100, i.e. the structural elements 200, 300 and 400 are associated with the hierarchical level 1. Structural elements which are directly subordinated to one of the elements 200, 300 and 400 which are associated to the hierarchical level 1, i.e. the structural elements 201, 202, 203, 301, 302, 401, 402, 403 and 404 are associated to the hierarchical level 3. The association of structural elements to hierarchical level may be continued in accordance with the aforementioned teaching.

It shall be noted, that the hierarchical structure illustrated in Fig. 1 a is limited to 4 hierarchical levels (level 0 to 3) only for simplicity. The number of hierarchical levels is arbitrary and theoretically unlimited. The number of structural elements within one hierarchical level is also arbitrary and theoretically unlimited. The depicted illustration shall only serve to present the principle concept according to an embodiment of the invention.

It shall be also remarked, that the hierarchical level 0 is the hierarchical highest level, i.e. the root level, whereas that hierarchical level to which the highest level numbering is assigned is the hierarchical lowest level, i.e. the level numbering is performed in an inverse manner.

Referring again to Fig. 1a an introduction to an application of the above described hierarchical structuring on the complex structure according to the invention concept of the present invention will be presented.

Following assumptions shall be given: A complex system is given. The complex system can be divided into a plurality of individual components the totality of which represents the complex system. The division of the complex system in performed in such a way that in a first divisional step the complex system is divided into several main components. In turn, each of these main components is divided in to one or more components. The resulting sub-components may be further divided into further sub-components forming the respective components. The divisional procedures as described is performed until a suitable and desired grading of the complex system is obtained, respectively, on the basis of which further operations are performed according to embodiments of the present invention.

The above purposed dividing of the given complex system results in a strict hierarchical structure as defined and described with reference to Fig. 1a. That is, referring to Fig. 1a, the depicted element 100 represents the complex system, whereas the structural elements 200 to 404 represents components of the complex system obtained by the aforementioned dividing procedure. As an example a power plant, a production plant, a production unit, a production line or any further industrial installation may be assumed to correspond to the complex system introduced above. In detail in view of the example power plant the association of the elements to components for the power station shall be presented. In a first divisional step, a typical power plant may be divided into the components buildings, machinery, exhaust emission treatment, electrical system, water system, auxiliary plants and unit etc. In context with this example, the components machinery system, exhaust emission treatment system and electrical system shall represent the components resulting from the first divisional step and correspondingly the machinery system shall be associated with the structural element 300, the exhaust emission treatment system shall be associated with the structural element 200 and the electrical system shall be associated with the structural element 400.

The next divisional step relates to each of the identified components machinery system, exhaust emission treatment system and electrical system for dividing one or more these components into further sub-components. With respect to the component machinery system associated to the element 300 a further dividing may result in a component generator system and a component boiler system which are associated correspondingly to the elements 301 and 302, respectively. With respect to the component exhaust emission treatment system associated to the element 200 a further dividing may result in a desulfurisation system, a denitrogenation system and a dust extraction system which are associated correspondingly to the elements 201, 202 and 203, respectively. With respect to the component electrical system associated to the element 400 a further dividing may result in an electrical control system, an electrical transformer system, a switch gear system and a cable system which are associated correspondingly to the elements 401, 402, 403 and 404, respectively.

Depending on necessitates and requirements, respectively, the dividing of the aforementioned components is further refined. As example, the component boiler system associated to the element 301 is divided into a component first boiler unit and a component second boiler unit which are associated correspondingly to the elements 311 and 312, respectively. The component generator system associated to the element 302 is divided into a component generator unit and a component generator electric system which are associated correspondingly to the elements 313 and 314, respectively. Similar refining of the other named components is performed in similar way. A redefining of the component desulfurisation system associated to the element 201, the component dust extraction system associated to the element 302, the component an electrical transformer system associated to the element 402, the component switch gear system associated to the element 403 and the component a cable system associated to the element 404 is outlined in Fig. 1a.

The dividing of the complex system results in a strict hierarchical structure having a tree-like structure. Each element of the structure can be assigned to a branch of the tree-like structure. The hierarchical depth of the hierarchical structure corresponds to the number of refining operations performed on the components, wherein the hierarchical depth can vary from branch to branch within the tree-like structure. That is, Referring to Fig. 1a, the hierarchical depth of the branch formed by the structural element 200 which corresponds to the exhaust emission treatment system has a hierarchical depth down to the hierarchical level 2 (excluding the indicated elements of hierarchical level 3), the hierarchical depth of the branch formed by the structural element 300 which corresponds to the machinery system has a hierarchical depth down to the hierarchical level 3 and the hierarchical depth of the branch formed by the structural element 400 which corresponds to the electrical system has a hierarchical depth down to the hierarchical level 2 (excluding the indicated elements of hierarchical level 3).

The dividing of given example power plant into a plurality of components which are schematically structured into a hierarchical structure is limited to only a few components. It is to be understood, that a complete schematic structuring on the basis of the aforementioned dividing results in a complicated overall appearance. To reach the object of the present invention, the hierarchical structure to which the plurality of components is associated which reflects the complex system is simplified. The simplification is an essential operation for reaching the object.

Fig. 1b shows a simplified hierarchical structure of the components constituting the complex system in accordance with a component rating according to an embodiment of the invention.

The simplification of the hierarchical structure serve to identify relevant components on the basis of which a following evaluation of the complex system is performed to finally obtain the overall replacement data of the complex system. These data may be replacement values or signals representative of the value of the components. The simplification is based on a rating operation performed on the components, wherein the rating operation is operated with respect to the hierarchical structure obtained from the dividing of the complex system into the components. To allow a rating of the components value data value signals are assigned to each of the components being obtained from complex system and taken in the hierarchical structure into account.

Fig. 1b shows a simplified hierarchical structure resulting from the rating of the components. The rating of the components is preferably performed on components being associated to elements arranged in a pre-defined hierarchical level of a branch within the tree-like structure. That is with reference to element 200, the pre-defined hierarchical level is equal to 2 and the rating is performed on the components which have been associated to the hierarchical level 2 corresponding to the elements 201, 202 and 203. On the basis of the value signals assigned to the components being associated to the elements 201, 202 and 203 the rating illustrated in accordance with the example structure of Fig. 1b results therein that the components associated to the elements 201 and 202 will be considered for following operations whereas the component being associated to the element 202 is not taken into account. Analogously, the rating of the branch formed by the element 300 results therein, that the components which are associated with the elements 311, 312 and 313 will be considered for following operations. The rating of the components which are associated to elements arranged subordinately to the element 300 has been performed with a pre-defined hierarchical depth down to the hierarchical level 3. the rating of the branch formed by the element 400 is performed with a pre-defined hierarchical depth down to the hierarchical level 1 such that only the component which is associated to the element 400 is considered for following operations. The rating performed on the basis of the value signals assigned to the components is preferably a comparing of the value signals with a threshold value which may be pre-defined or which may be derived from the value signals which are compared (means value etc.). In accordance with the results of the comparisons rating value signals are obtained on the basis of which the simplifying is performed resulting for example in a hierarchical structure described with respect to Fig. 1b.

The simplified hierarchical structure serve to finally derive the overall replacement value of the complex system. An overview of the operational steps will be given in the following flow chart.

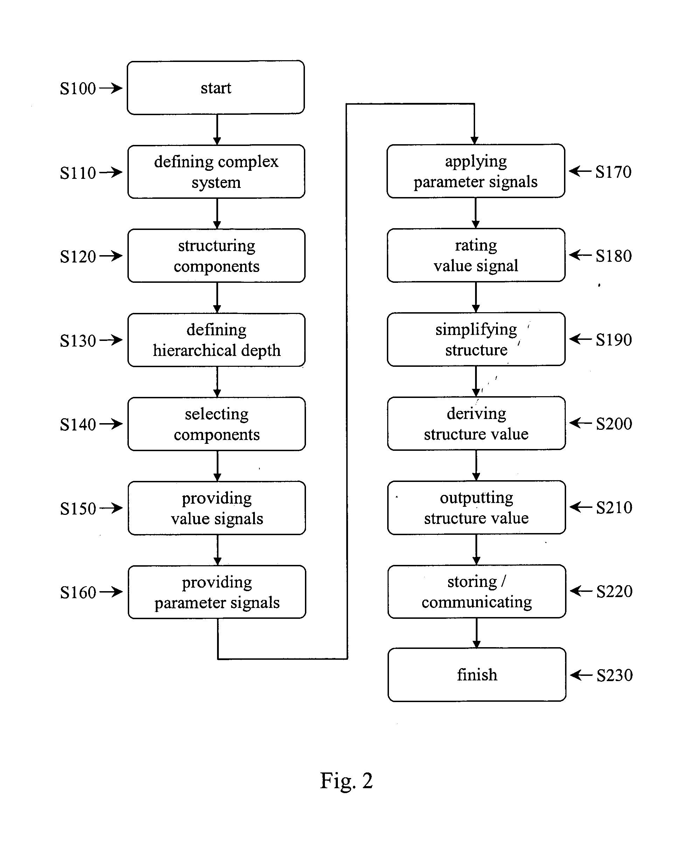

Fig. 2 shows a flow chart illustrating an operational sequence of the method according to an embodiment of the invention.

In an operation S100, the method for determining the overall replacement value of a complex system according to an embodiment of the invention is started.

In an operation S110, the complex system is defined. The defining of the complex system comprises the aforementioned defining of the plurality of components which shall represent to complex system and shall be suitable for forming a hierarchical structure being based on the interdependencies of the components within the complex system. The defining may be performed by receiving of the signals associated with the components to set up the hierarchical structural elements mapping the plurality of components. Alternatively, the defining may comprise a defining of the complex system whereas the assigning of components of the complex system is derived from matter information obtained from a pre-defined pattern object relating to the type of the complex system or from a related complex system being structured in a plurality of components. The defining operation may comprise a receiving from an inputting component being represented by a user interface able to receive a corresponding input, a receiving via a data communication connection established via a communication interface, a receiving from a storage medium, a storage component, a mass storage etc.

In an operation S120, the hierarchical structural elements are structured in accordance with the complex system. The interdependencies between the plurality of components are mapped to the hierarchical structure resulting in a strict tree-like structure referred to in Fig. 1a.

In an operation S 130, a hierarchical depth is defined. The definition of the hierarchical depth may be pre-defined by the number of complex components on the basis of which the hierarchical structure is established which has a definite hierarchical depth. Alternatively, a hierarchical depth is defined for each branch of the hierarchical tree-like structure as described in detail with reference to Fig. 1b. The definition hierarchical depth will allow to perform the simplifying operation resulting in a simplified hierarchical structure.

In an operation S140, a first selecting of the components is performed with respect to the hierarchical depth, i.e. components which are associated to elements which are assigned to a hierarchical level below the corresponding pre-defined hierarchical depth may be excluded from further operating.

In an operation S150, value signals are provided which relate to the original components and are correspondingly associated to the elements which are associated to the components. Value signals may be defined for each of the components having the lowest hierarchical level in each branch. The defining of the value signals may comprise a receiving of the value signals from an inputting component being represented by a user interface able to receive the value signals, a receiving of the value signals via a data communication connection established via a communication interface, a receiving of the value signals from a storage medium, a storage component, a mass storage etc. The value signals may be obtained by a previous measurement, sensing or determination operation.

In an operation S160, parametric signals are provided which relate to one or several of the value signals being defined in the operation S150. The parametric signals allow to adapt the value signals to changing conditions or the obtain value signals suitable for the following rating operation by applying a functional relationship on the original provided value signals, wherein the functional relationship is defined by the parametric values. The value signal which relates to a certain component may be based on a basic value signal which is not directly applicable to the following rating operation. The functional relationship defined by the parametric signals allows to derive the suitable value signal from the basic value signal. Such a functional relationship may be an exponential relationship, an inverse exponential relationship, a logarithmic relationship, a stepfunction and the like.

The parametric signals also allow to consider static and/or varying influences to the value signals, which have to be taken into account to obtain value signals suitable for the rating operation. Moreover, the parametric signals may establish a mapping scheme on the basis of which the defined basic value signals are mapped to value signals.

In an operation S170, the provided parametric signals are applied on the corresponding on or more value signals to obtain value signals applicable to the rating operation.

In an operation S 180 and S 190, the rating operation is performed and the hierarchical structure is simplified. The rating operation as well as the simplifying of the hierarchical structure has been described in detail with respect to Fig. 1b.

In an operation S200, the overall replacement value of the complex system is derived from the simplified hierarchical structure (as shown in Fig. 1b) and the value signals associated to the components and assigned to the structural elements. The value signals are stepwise combined beginning with the hierarchical lowest level to obtain combined value signals of the superordinate level following the hierarchical structure upwards. The value signals are successively determined for each hierarchical level such that finally a combined value signal is assigned to the structural root element corresponding to the required overall replacement value. That means referring back to Fig. 1b showing a simplified hierarchical example structure, the value signals which may obtained be from basic value signals in conjunction with associated parametric signals and which are assigned to the elements 201 and 203 are combined to obtain a combined value signal associated with the element 200. Due to the simplification the element 202 also originally arranged subordinately to the element 200 is not considered for obtaining the combined value signal.

In an operation S210, the resulting value signal associated to the root element which is in turn associated to the complex system is outputted as the overall replacement value for further processing.

In an operation S220, the overall replacement value and the simplified hierarchical structure by the means of which the overall replacement value has been obtains is stored in a storage component and/or communicated via a data communication network.

In an operation S230, the method for determining the overall replacement value of a complex system according to an embodiment of the invention is started.

In case the determination of the overall replacement value resulting from the method according to an embodiment of the invention has to be performed again, the determination may be based on the obtained simplified hierarchical structure which speeds up a renewed determination enormously. In particular, in case the determination is based on the preciously determined simplified hierarchical structure which has a limited number of components in comparison with the original number of components, increases the possibility to conclude to components and individual signal values which may affect the resulting overall replacement value.

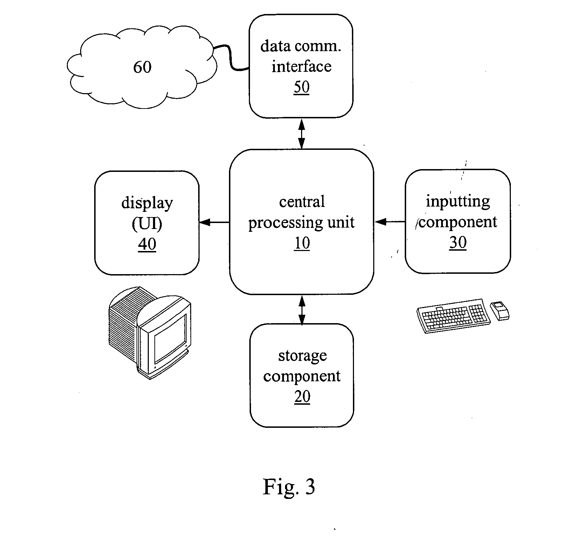

Fig. 3 shows a block diagram illustrating a processing device for performing the method according to an embodiment of the invention.

A typical embodiment of a processing device capable to perform an embodiment of the aforementioned method according to the invention may comprise a central processing unit (CPU) 10, at least a storage component 20 representing nay means able to store electronic data, an inputting component 30 for inputting data, a display 40 for displaying information, preferably supported by a user interface and a data communication interface 50 which allows to communicate data via a data communication network 60. The data communication network 60 represents any wired or wireless network adapted to communicate electronic data such as a local area network (LAN), a wide area network (WAN) and the like. Components and means required for performing at least a part of the aforementioned operations may be constituted by code sections stored in the storage component and loadable therefrom to be carried out by the processing unit 10 which performs instructions included in the code sections.

The signals required for performing the method according to an embodiment of the invention may be defined by receiving a corresponding input from the inputting component 30 and/or by receiving through the data communication network 60 via the data communication interface 50.

Again referring back to the example power plant given with respect to Fig. 1a, the total number of the components illustrated on the basis of the power plant example have been reduced to a selection of components which are assumed to be relevant to the determination of the overall replacement value. The selection of the components is obtained from a rating of signal values assigned to the components of the system. The overall replacement value may be dedicated to serve a signal for security issues such that the signal may be monitored to decide to switch off the power plant in case the risk assessment being based on the overall replacement value and the signal suggest the termination, respectively.

The individual signals may be composed of a basic individual signals describing replacement values of the respective components and parameter values associated to the basic individual signals. The parameter values define current variations in the replacement values of the respective components due to environmental influences, operation states of the components and the like. Based on these signals the individual signals of all components can be determined in accordance with their arrangements in the hierarchical structure mapping the complex system and its components. The availability of one replacement value resulting from the determination ensures that in case a control signal is derived therefrom a reliable signal is available. Moreover, the signal is well suited for being communicated, particularly when compared with the amount of information which may have to be communicated in case all individual value signal in conjunction with the description of the complex system is to be communicated.

It will be obvious for those skilled in the art that as the technology advances, the inventive concept can be implemented in a broad number of ways. The invention and its embodiments are thus not limited to the examples described above but may vary within the scope of the claims.

## Claims

1. Method for semi-automatically determining and outputting overall replacement data of a plurality of individual components of a complex system,
said method comprising:
- providing said individual components at an input terminal, wherein said individual components are structured hierarchically in a plurality of hierarchical levels;
- defining at least one depth signal at said input terminal, wherein said at least one depth signal represents at least one maximum hierarchical depth level;
- selecting a set of components from said individual components in accordance with said depth signal;
- defining a plurality of individual data signals at said input terminal, each individual signal being associated with one component of said set of components;
- determining a set of rating signals by rating components of said set of components;
- deriving said overall replacement data from said individual data signals of said set of components in accordance with said rating signals; and
- outputting said overall replacement data by an output terminal.

2. Method according to claim 1, wherein said deriving of said overall replacement data comprises:
- determining a subset of components from said set of components on the basis of said rating signals,
wherein said subset of components corresponds to a simplified hierarchical structure which is obtained from said hierarchical structure in accordance with said rating signals; and
- deriving said overall replacement data from said individual data signals of components which are comprised in said subset of components.

3. Method according to claim 1 or claim 2, comprising:
- defining at least one parameter signal at said input terminal of said user interface; wherein each of said at least one parameter signal is associated with one individual data signal; and
- modifying at least one individual data signal in accordance with said associated parameter signal.

4. Method according to anyone of the preceding claims, wherein said providing of said individual components comprises:
- analysing said individual components to identify interdependencies; and
- forming said hierarchical structure in accordance with said identified interdependencies.

5. Method according to anyone of the preceding claims, wherein each individual data signal represents individual replacement data of a component.

6. Method according to claim 5, wherein each parameter data signal defines an environmental influence on said associated individual replacement data.

7. Method according to anyone of the preceding claims, wherein said complex system comprises a number of collections of components, wherein in turn each collection of components represents a complex system for which an overall replacement data is determined and a total replacement data is determined from said number of overall replacement data.

8. Device for semi-automatically determining and outputting overall replacement data of a plurality of individual components of a storage system, particularly for performing said method for semi-automatically determining and outputting overall replacement data,
said device comprising:
- an input terminal for providing said individual components, for providing at least a depth signal and for providing a plurality of individual data signals;
wherein the individual components are structured hierarchically in a plurality of hierarchical levels; wherein said at least one depth signal represents at least one maximum hierarchical depth level; wherein each individual signal is associated with one component of said set of components;
- a component for selecting a set of components from said individual components in accordance with said depth signal;
- a component for determining a set of rating signals by rating components of said set of components;
- a component for deriving said overall replacement data from said individual data signals of said set of components in accordance with said rating signals; and
- an output terminal for outputting said overall replacement data.

9. Device according to claim 12, wherein said component for deriving said overall replacement data comprises:
- a component for determining a subset of components from said set of components on the basis of said rating signals,
wherein said subset of components corresponds to a simplified hierarchical structure which is obtained from said hierarchical structure in accordance with said rating signals; and
- said component for deriving said overall replacement data from said individual data signals of components which are comprised in said subset of components.

10. Device according to claim 12 or claim 13, comprising:
- said input terminal of said user interface for defining at least one parameter data signal; wherein each of said at least one parameter data signal is associated with one individual data signal; and
- a component for modifying at least one individual data signal in accordance with said associated parameter data signal.

11. Device according to anyone of the claims 12 to 14, comprising:
- a component for analysing said individual components to identify interdependencies; and
- a component for forming said hierarchical structure in accordance with said identified interdependencies.

12. Software tool for determining a signal representing replacement data of a system, comprising program portions for carrying out the operations of any one of the claims 1 to 7, when said program is implemented in a computer program for being executed on a processing device, a terminal device, a serving device or a network device.

13. Computer program product for handling of location information, comprising loadable program code sections for carrying out the operations of any one of the claims 1 to 7, when said computer program is executed on a processing device, a network processing device, a terminal device, a serving device or a network device.

14. Computer program product for determining a signal representing replacement data of a system, wherein said computer program product is comprising program code sections stored on a computer readable medium for carrying out the method of any one of the claims 1 to 7, when said computer program product is executed on a processing device, a terminal device, a serving device or a network device.

15. Computer data signal embodied in a carrier wave and representing instructions which when executed by a processor cause the operations of anyone of claims 1 to 7 to be carried out.
